# EUROPÄISCHE PATENTSCHRIFT

(11) **EP 0 664 230 B1**
(45) Veröffentlichungstag und Bekanntmachung des Hinweises auf die Patenterteilung: **22.10.1997**
(21) Anmeldenummer: 94890216.8
(22) Anmeldetag: 21.12.1994
(51) Int. Cl.: B60C 11/12

(54) **Fahrzeugreifen**
Vehicle tyre
Bandage pneumatique pour véhicule

(30) Priorität: 20.01.1994 AT 101/94
(43) Veröffentlichungstag der Anmeldung: 26.07.1995
(73) Patentinhaber: Semperit Reifen Aktiengesellschaft, A-2514 Traiskirchen (AT)
(72) Erfinder: Beckmann, Otto, Dr., A-2514 Traiskirchen (AT)
(74) Vertreter: Vinazzer, Edith, Dipl.-Ing.

(56) Entgegenhaltungen:
- EP-A- 0 378 090
- EP-A- 0 450 251
- DE-A- 4 107 547
- GB-A- 564 580
- GB-A- 2 053 783
- PATENT ABSTRACTS OF JAPAN vol. 13 no. 130 (M-808) ,30.März 1989 & JP-A-63 297107 (TOYO RUBBER CO. LTD.) 5.Dezember 1988,

## Beschreibung

Die vorliegende Erfindung betrifft einen Fahrzeugreifen mit einem Laufstreifen, gemäß dem Oberbegriff des Anspruches 1.

Laufstreifen für Fahrzeugluftreifen werden, insbesondere zum Gewährleisten bestimmter Griff- und Traktionseigenschaften üblicherweise mit Feineinschnitten versehen. Je nach Einsatzzweck des Reifens wird dabei eine höhere oder niedrigere Anzahl von Feineinschnitten vorgesehen, beispielsweise ist es für einen guten Schneegriff wesentlich, im Laufstreifen eine große Anzahl von Feineinschnitten anzuordnen. Im Neuzustand bei einem nicht oder wenig abgefahrenen Laufstreifen ist der Effekt, der durch die Feineinschnittanordnung erzielt werden kann, meist sehr zufriedenstellend. Mit fortschreitendem Abrieb des Laufstreifens tritt jedoch oft eine drastische Verminderung der Griffeigenschaften ein, was insbesondere darauf zurückzuführen ist, daß mit geringerer Feineinschnittiefe die mögliche Auffächerung, die für die Grifferhöhung wichtig ist, nachläßt, und daß die aus Gründen der Laufstreifenstabilität oftmals vorgesehenen Grundanhebungen in Feineinschnitten zwangsweise bewirken, daß die Anzahl bzw. Länge der zur Verfügung stehenden Griffkanten merklich verringert wird. Oft werden solche Feineinschnitte auch nur in einer bestimmten Tiefe von einigen Millimetern, die um einiges kleiner ist als die sonstige Dessin- bzw. Nuttiefe, vorgesehen, so daß sie überhaupt beim Abrieb des Laufstreifens verschwinden. Damit geht eine merkbare Verschlechterung des Traktions- und Bremsverhaltens des Reifens einher.

Ein Fahrzeugreifen der eingangs genannten Art ist beispielsweise aus der JP-A-63 297107 bekannt. Der Laufstreifen dieses Reifens besitzt Blöcke, die mit kreisringförmigen Feineinschnitten versehen sind. Die diesbezügliche Anordnung ist dabei so getroffen, daß diese Feineinschnitte Profilelementinseln umschließen, die kegelstumpfförmig gestaltet sind, in das Laufstreifeninnere etwa bis zur halben Dessintiefe reichen und die Blockoberfläche überragen. Durch diese Ausgestaltung besitzen die Profilelementinseln eine geringere Steifigkeit als der Block, in dem sie angeordnet sind wodurch insbesondere das Bremsverhalten auf nasser Fahrbahn verbessert sein soll. Bei einem Reifen mit einem derartigen Laufstreifenprofil sind sowohl ein unregelmäßiger Abrieb als auch eher schlechte Griffeigenschaften auf winterlichen Fahrbahnen zu erwarten. Darüber hinaus ist es auch bei dieser bekannten Ausführungsform von Nachteil, daß mit fortschreitendem Abrieb relativ bald keine Griffkanten mehr zur Verfügung stehen. Eine Ausgestaltung dieser Feineinschnitte auf volle Dessintiefe ist aus dem Grund problematisch, weil insbesondere beim Ausformungsvorgang des fertig vulkanisierten Reifens die Gefahr besteht, daß Risse entstehen oder daß die von den Lamellenblechen umschlossenen Profilteile überhaupt abreißen.

Die GB-A-2 053 783 befaßt sich damit, einen Reifen, der für den Betrieb auf unwegsamen Gelände geeignet sein soll, beispielsweise einen Reifen für landwirtschaftliche Maschinen, zu verbessern. Um während der Vulkanisation solcher Reifen Deformationen des Gürtelverbandes zu vermeiden, wird vorgeschlagen, im Laufstreifen Vertiefungen auszuformen, die kegelstumpfförmig gestaltet sein können.

Der aus der DE-A-41 07 547 bekannte Fahrzeugluftreifen besitzt ein Laufstreifenprofil, welches mit Feineinschnitten versehen sind, die derart gekrümmt in das Laufstreifeninnere verlaufen, daß sie an Reifenprofiloberfläche einen Austrittswinkel bilden, der zum Eintauchwinkel am Einschnittgrund so verläuft, daß zwischen der Profiloberfläche und dem Einschnittgrund eine Umkehrung der Neigung der Feineinschnitte erfolgt. Auf diese Weise gekrümmte Feineinschnitte können auch kreisringförmig gestaltet werden. Durch diese bekannte Ausgestaltung soll die adherente Bindung des Fahrzeugluftreifens zum Untergrund verbessert werden.

Konstruktionen, mit denen die oben geschilderten Probleme gelöst werden sollen sind ebenfalls aus dem Stand der Technik bekannt. So ist es beispielsweise aus der EP-A 0450251 bekannt, Feineinschnitte in einer bestimmten Profilelementtiefe in mindestens zwei Feineinschnittzweige aufzuspalten, um mit fortschreitendem Abrieb des Laufstreifens zusätzliche Griffkanten zu schaffen. Eine ähnliche Lösung ist aus der EP-A 0378090 bekannt. Diese bekannten Lösungen haben jedoch den gravierenden Nachteil, daß, sobald der Reifen bis auf den Bereich einer solchen Abzweigung oder Aufspaltung abgefahren ist plötzlich ein instabiler Zustand entsteht, was insbesondere in einem unregelmäßigem Abrieb und stellenweisen Profilausbrüchen resultieren kann.

Hier setzt nun die Erfindung ein, deren Aufgabe darin besteht, einen Laufstreifen für einen Fahrzeugreifen der eingangs genannten Art so zu gestalten, daß über die gesamte Lebensdauer des Reifens, demnach auch nach größerem Laufstreifenabrieb, ausreichend Griffkanten zur Verfügung stehen, ohne die erwähnten Nachteile bekannter Ausführungen in Kauf nehmen zu müssen.

Gelöst wird die gestellte Aufgabe erfindungsgemäß dadurch, daß die die Profilelementinseln umschließenden Feineinschnitte entweder zumindest über einen Teil ihrer radialen Erstreckung derart doppeltkonisch gestaltet sind, daß die Querschnittsfläche der Profilelementinseln von der Laufstreifenoberfläche aus betrachtet, vorerst größer wird und ab einer bestimmten Dessintiefe wieder abnimmt, oder ab einer bestimmten Dessintiefe in ein Paar voneinander getrennte Feineinschnitte übergehen, deren gegenseitiger Abstand sich mit zunehmender Profiltiefe verringert.

Bei beiden erfindungsgemäßen Ausführungen ist sichergestellt, daß die Ein- und Ausformvorgänge der Feineinschnitte beim Vulkanisationsvorgang problemlos möglich sind. Durch das Vorsehen von "überhängenden" Bereichen - bei der einen Ausführungsform durch den doppeltkonischen Verlauf der Feineinschnitte, bei der anderen Ausführungsform durch die Verringerung des Abstandes der beiden im Laufstreifeninneren im Anschluß an die die Profilelementinseln anschließenden Feineinschnitte - werden die beim Ein- und Ausformen wirkenden Kräfte so verteilt, daß Rißbildungen vermieden werden. Somit können erfindungsgemäße Feineinschnitte auch auf volle Dessintiefe reichend ausgeführt werden und die beim Neureifen zur Verfügung stehende Griffkantenlänge kann über die gesamte Lebensdauer des Reifens zumindest im wesentlichen erhalten werden.

Bei einer ersten bevorzugten Ausführungsform der Erfindung sind die Profilelementinseln zumindest über einen Teil ihrer Erstreckung kegelförmig oder kegelstumpfförmig gestaltet. Bei dieser Ausführungsform werden günstigerweise Eckbereiche vermieden.

Bei einer weiteren Ausführungsform der Erfindung sind die Profilelementinseln, zumindest über einen Bereich ihrer radialen Erstreckung, pyramidenförmig, pyramidenstumpfförmig oder pyramidenstumpfähnlich gestaltet.

Um den Effekt einer Griffkantenverlängerung während des Laufstreifenabriebes optimal auszunützen, ist es dabei von Vorteil, wenn die Abnahme der Querschnittsfläche erst mit Erreichen der gesetzlichen Mindestdessintiefe beginnt.

Zur Beeinflussung weiterer Laufstreifeneigenschaften, beispielsweise der Biegesteifigkeit, kann es von Vorteil sein, wenn nach einem weiteren Merkmal der Erfindung von den die Profilelementinseln einschließenden Feineinschnitten weitere Feineinschnitte abzweigen, die entweder sackförmig enden oder die die Profilelementinseln umschließenden Feineinschnitten mit Nuten verbinden oder Profilelementinseln einschließende Feineinschnitte miteinander verbinden. Auf diese Weise können auch die Gesamtgriffeigenschaften des Laufstreifenprofiles günstig beeinflußt werden.

Für einen gleichmäßigen Abrieb des Laufstreifenprofiles ist es ferner von Vorteil, wenn die Schnittkanten zwischen den in die Profilelementinseln einschließenden Feineinschnitten und den von diesen abzweigenden Feineinschnitten mindestens einen Winkel von 15 Grad mit einer Normalen auf die Profiloberfläche einschließen.

Um die Blockstabilität günstig zu beeinflussen, kann es von Vorteil sein, wenn die von den die Profilelementinseln einschließenden Feineinschnitten abzweigenden Feineinschnitte breiter sind, insbesondere doppelt so breit sind als die die Profilelementinseln einschließenden Feineinschnitte.

Um die durch die Profilelementinseln geschaffenen zusätzlichen Griffkanten erst wirksam werden zu lassen wenn ein gewisser Abrieb bereits stattgefunden hat, können nach einem weiteren Merkmal der Erfindung Feineinschnitte vorgesehen werden, die sich unterhalb der Profilelementoberfläche aufspalten, so daß die Profilelementinseln unterhalb der Profiloberfläche angeordnet sind.

Um den Effekt der Griffkantenverlängerung optimal auszunützen ist es ferner günstig, wenn die Profilelementinseln an ihrer Basis unmittelbar aneinander angrenzen.

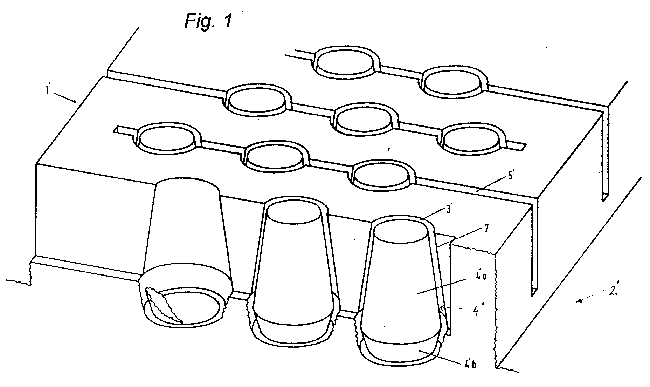

Weitere Merkmale, Vorteile und Einzelheiten der Erfindung werden nun anhand der Zeichnung, die mehrere Ausführungsbeispiele darstellt, näher beschrieben. Dabei zeigen die Figuren 1 bis 4 schematisch Schrägansichten von Profilelementen eines Fahrzeugluftreifens mit unterschiedlichen Ausführungsvarianten der Erfindung. Die Profilelemente sind dabei an den Frontseiten aufgeschnitten dargestellt.

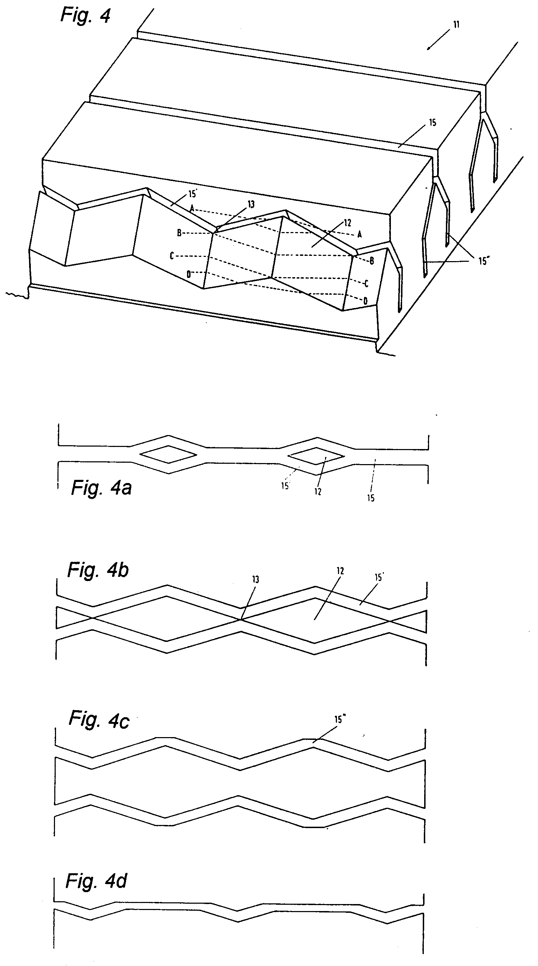

Fig. 4a, Fig. 4b, Fig. 4c und Fig. 4d sind Schnittdarstellungen der Fig. 4 entlang der Linien A-A, B-B, C-C und D-D. Alle diese Schnitte erfolgen parallel zur Profiloberfläche.

Vorab wird darauf verwiesen, daß in der nachfolgenden Beschreibung unter der Bezeichnung "Feineinschnitt" eine schmale Nut zu verstehen ist, deren Breite vorzugsweise konstant gehalten ist und zwischen 0,3 mm und 1,5 mm beträgt.

Das in den Zeichnungsfiguren jeweils dargestellte Profilelement kann ein im Laufstreifen eines Fahrzeugluftreifens in Reifenumfangsrichtung umlaufendes Laufstreifenband sein, welches beispielsweise beidseitig durch Nuten begrenzt ist oder ein Profilblock, welcher, sofern er sich im Mittelbereich des Laufstreifens befindet, allseitig durch solche Nuten 2 begrenzt ist.

Fig. 1 zeigt eine Ausführungsform, bei der im Profilelement 1' durch Feineinschnitte 3' Profilelementeinseln 4' geschaffen werden, die sich aus zwei Kegelstümpfen 4'a, 4'b zusammensetzen. Von der Profilelementoberfläche aus betrachtet reicht der erste, sich konisch ins Profilelementinnere verbreitende Kegelstumpf 4'a bis in eine Tiefe von 50 bis 90 % der Dessin- bzw. Nuttiefe, insbesondere bis ca. 70 %. Der unmittelbar an den ersten Kegelstumpf 4'a anschließende zweite Kegelstumpf 4'b verringert seinen Durchmesser bis zur Basis der Profilelementinsel 4'. Bevorzugt ist dabei, wie dargestellt, der Durchmesser des Kegelstumpfes 4'b an dessen Basis größer als der Durchmesser des Kegelstumpfes 4'a an der Profilelementoberfläche.

Diese doppeltkonische Konstruktion mit gegenläufig konischem Fußteil (Kegelstumpf 4'b) erlaubt es, beim Vulkanisationsvorgang die schwierigen Einform- und Ausformvorgänge problemlos zu gestalten. Weiters sind solche doppeltkonischen Anordnungen auch in Hinblick auf die Profilhaltbarkeit von Vorteil, da Profilausbrüche meist an den Ausläufen von Feineinschnitten beginnen. Insbesondere ist es weniger günstig, wenn die Ausläufe benachbarter Profilelementinseln einander zu nahe kommen. Da die beschriebene doppeltkonische Anordnung die Abstände zwischen den Ausläufen der Feineinschnitte erhöht, wirkt sie der Gefahr von Profilausbrüchen entgegen.

Um eine optimale Griffkantenlänge zur Verfügung zu haben, ist es Vorteil, wenn der Kegelstumpf 4'a bis zur gesetzlichen Mindestdessintiefe reicht.

Von den Feineinschnitten 3', die die Profilelementinseln 4' umschließen, zweigen weitere Feineinschnitte 5' ab, die im vorliegenden Ausführungsbeispiel als gerade Feineinschnitte gestaltet sind und die benachbarte Feineinschnitte 3' miteinander verbinden. Weitere Feineinschnitte 5' können Feineinschnitte 3' mit einer der Nuten 2' verbinden.

Es ist ferner auch möglich, von den Feineinschnitten 3' abzweigende, sackförmig endende Feineinschnitte vorzusehen. Weiters ist es auch möglich, die Feineinschnitte 5' tiefer gehen zu lassen als dies Fig. 1 zeigt.

Abzweigende Feineinschnitte 5' haben mit den inselumfassenden Feineinschnitten 3' gemeinsame Kanten 7, die mit einer Normalen auf der Profiloberfläche einen Winkel einschließen, der insbesondere mindestens 15 Grad betragen soll.

Die abzweigenden Feineinschnitte 5' können die gleiche Breite aufweisen wie die Feineinschnitte 3'.

Dabei ist es jedoch günstig, wenn die abzweigenden Feineinschnitte 5' ca. doppelt so breit ausgeführt sind wie die Feineinschnitte 3', die die Profilelementinseln 4' umschließen.

Die Verdoppelung der Breite der Feineinschnitte 5' gegenüber den Feineinschnitten 3' bringt zunächst Vorteile bei der Anfertigung der Reifen-Heizform. Es lassen sich solche Feineinschnitte 5' durch zueinander spiegelbildliche Paare von Lamellenblechen realisieren, die im Bereich, der den Feineinschnitten 5' zugeordnet ist, aneinanderstoßen. Vom fertigen Reifen her gesehen ist es ebenfalls vorteilhaft, wenn die Feineinschnitte 3' dünner sind als die Feineinschnitte 5', weil solcherart zu hohe Beweglichkeiten der Profilelementinseln 4' vermieden werden. Dies bedeutet auch, daß ein gleichmäßiger Abrieb durch eine geeignete Dickenverteilung der Feineinschnitte wirkungsvoll unterstützt werden kann.

Abweichend von der in Fig. 1 dargestellten Ausführungsform können bei sonst analoger Ausführung die Profilelementinseln 4' einen elliptischen Querschnitt aufweisen, wobei die größere Achse bevorzugt in Richtung des Verlaufes der Feineinschnitte 5' orientiert wird.

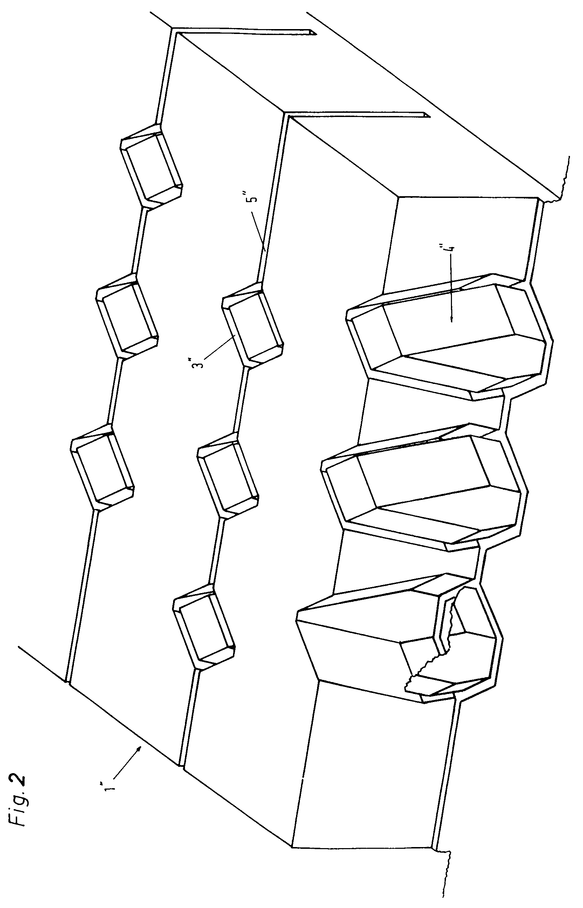

Ein weiteres Ausführungsbeispiel ist in Fig. 2 dargestellt, wobei im Profilelement 1'' durch Feineinschnitte 3'' Profilelementinseln 4'' gebildet werden, die pyramidenstumpfähnlich gestaltet sind. An der Profilelementoberfläche und bei neuem, nicht abgefahrenem Reifen bilden die Feineinschnitte 3'' eine Raute. Diese Raute wird zur Basis der Profilelementinsel 4'' zu einem, insbesondere regelmäßigen Sechseck, indem von den Rautenseiten rechteckförmige, zur Profiloberfläche geneigte Seitenflächen im Profilelementinnere reichen, und an zwei diagonal einander gegenüberliegenden Ecken der Raute dreieckförmige, senkrecht zur Profiloberfläche verlaufende Seitenflächen anschließen. Auch bei diesem Ausführungsbeispiel ist analog zu Fig. 1 eine doppeltkonische Ausgestaltung der Profilelementinseln 4'' getroffen, indem ein gegenläufig zur geschilderten Ausgestaltung ausgebildeter Fußteil vorgesehen ist. In dem in dieser Zeichnungsfigur dargestellten Ausführungsbeispiel sind ebenfalls abzweigende bzw. verbindende Feineinschnitte 5'' vorgesehen, die hier die Breite der Feineinschnitte 3'' aufweisen.

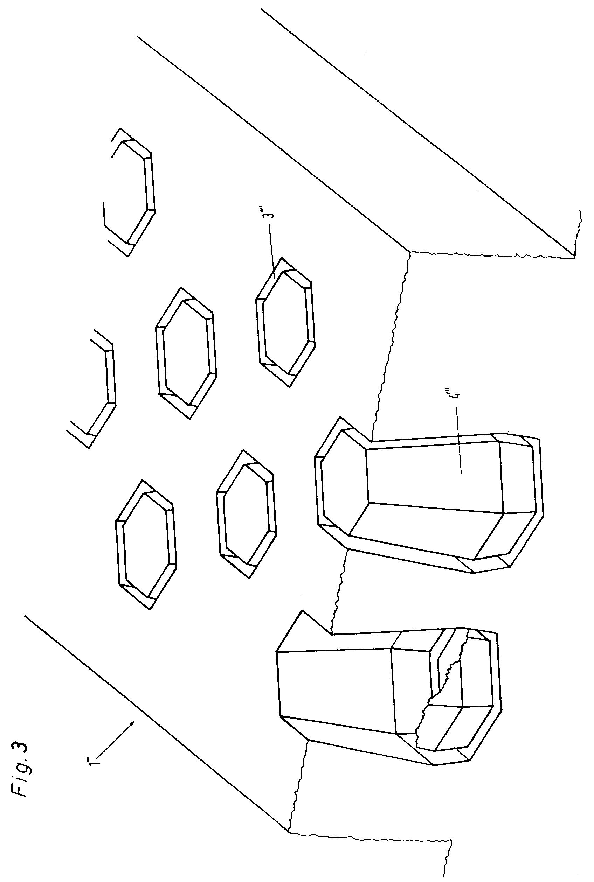

Fig. 3 zeigt eine Ausführungsvariante, mit einem Profilelement 1''', in welchem Feineinschnitte 3''' pyramidenstumpfförmige Profilelementinseln 4''' umschließen. Im dargestellten Ausführungsbeispiel handelt es sich dabei um einen sechsseitigen Pyramidenstumpf, der ebenfalls eine doppeltkonische Ausgestaltung besitzt. Abweichend von dieser dargestellten Ausführungsform können auch pyramidenstumpfförmige Profilelementinseln durch drei- bis fünfseitige Pyramidenstümpfe oder Pyramidenstümpfe, deren Seitenanzahl größer als sechs ist, gebildet werden.

Fig. 4 enthält eine weitere Ausführungsform der Erfindung, wobei hier ein Profilelement 11 mit Feineinschnitten 15 dargestellt ist, die im Neuzustand des Reifens, das Profilelement 11 gerade durchqueren. In einer Tiefe von wenigen Millimetern, bevorzugt in einer Dessintiefe von etwa 2 mm, erfolgt ein sukzessives Aufspalten der Feineinschnitte 15 in der Form, daß pyramidenförmige Profilelementinseln 12 mit der Grundfläche einer Raute entstehen. Fig. 4a, die einen Schnitt entlang der Linie A-A der Fig. 4 zeigt, veranschaulicht diesen Sachverhalt. Dabei ist die Ausgestaltung so getroffen, daß die Feineinschnittbereiche 15', welche die Inseln 12 umschließen, halb so breit ausgeführt sind wie die Feineinschnitte 15. Im dargestellten Ausführungsbeispiel sind pro Feineinschnitt 15 im Profilelement 11 zwei Profilelementinseln 12 vorgesehen, die in einer bestimmten Dessintiefe, bevorzugt etwa nach einem Drittel bis zur Hälfte der Profiltiefe an der Basis aneinander unmittelbar angrenzen, was in Fig. 4 durch die Lage von Sattelpunkten 13 eingezeichnet ist. Durch diese Sattelpunkte 13 ist auch der in Fig. 4b dargestellte Schnitt gezeichnet, der den geschilderten Sachverhalt weiter veranschaulicht. Die weitere Ausgestaltung ist so getroffen, daß mit zunehmendem Abfahren des Laufstreifens unterhalb der Sattelpunkte 13 die Profilelementinseln 12 verschwinden und zwei voneinander unabhängige Feineinschnitte 15'', die etwa entlang einer Zickzack-Form das Profilelement 11 komplett durchqueren, gebildet werden (siehe Fig. 4c). In weiterer Folge wird durch einen überhängenden Verlauf der Feineinschnitte 15'', was sich günstig auf die Profilelementstabilität auswirkt und das Ein- und Ausformen der das genannte Feineinschnittsystem formenden Lamellenbleche erleichtert, ein Übergang zu wiederum gerade verlaufenden Feineinschnitten geschaffen. Fig. 4d, wo ein Schnitt entlang der Linie D-D der Fig. 4 dargestellt ist zeigt ein "Zwischenstadium" dieser Ausgestaltung.

Generell gilt, daß die durch die Profilelementinseln bzw. die diese umschließenden Feineinschnitte geschaffene Vergrößerung der Griffkantenlänge während des Abriebes des Laufstreifens insbesondere derart erfolgt, daß die Profilelementinseln ihre Querschnittsfläche kontinuierlich vergrößern. Dabei liegt es im Ermessen des Fachmannes, die für die jeweilige Aufgabenstellung günstigste Umfangs- bzw. Querschnittsvergrößerung bzw. Änderung der Profilelementinseln zu bestimmen.

Es ist ferner möglich, den Profilelementinseln eine Vielzahl anderer Querschnitte, etwa einen ovalen Querschnitt, zu verleihen. Nach der Erfindung ist es dabei wesentlich, daß die Profilelementinseln ihren Querschnitt (parallel zur Profiloberfläche betrachtet) zumindest über 30 % der Dessintiefe des Profiles insbesondere stetig ändern, so daß eine Erhöhung der Griffkantenlänge mit fortschreitendem Abrieb zumindest in diesem Bereich gewährleistet ist.

## Patentansprüche

1. Fahrzeugreifen mit einem Laufstreifen, der durch Nuten (2) begrenzte Laufstreifenbänder oder Profilblöcke umfaßt, die mit Feineinschnitten (3',3'',3''',15) versehen sind, die, in radialer Richtung sich in den Laufstreifen erstreckend, Profilelementinseln (4',4'',4''',12) umschließen, deren Querschnittsfläche und/oder deren Umfang, parallel zur Laufstreifenoberfläche betrachtet, in Richtung Laufstreifeninneres größer wird, dadurch gekennzeichnet, daß die die Profilelementinseln (4',4'',4''',12) umschließenden Feineinschnitte (3',3'',3''',15) entweder zumindest über einen Teil ihrer radialen Erstreckung derart doppeltkonisch gestaltet sind, daß die Querschnittsfläche der Profilelementinseln (4', 4'', 4'''), von der Laufstreifenoberfläche aus betrachtet, vorerst größer wird und ab einer bestimmten Dessintiefe wieder abnimmt, oder ab einer bestimmten Dessintiefe in ein Paar voneinander getrennte Feineinschnitte (15'') übergehen, deren gegenseitiger Abstand sich mit zunehmender Profiltiefe verringert.

2. Fahrzeugreifen nach Anspruch 1, dadurch gekennzeichnet, daß die Abnahme der Querschnittsfläche erst mit Erreichen der gesetzlichen Mindestdessintiefe einsetzt.

3. Fahrzeugreifen nach Anspruch 1 oder 2, dadurch gekennzeichnet, daß die Profilelementinseln (4') zumindest über einen Teil ihrer radialen Erstreckung kegelförmig oder kegelstumpfförmig gestaltet sind.

4. Fahrzeugreifen nach Anspruch 1 oder 2, dadurch gekennzeichnet, daß die Profilelementinseln (4'', 4''', 12) zumindest über einen Teil ihrer radialen Erstreckung pyramidenförmig, pyramidenstumpfförmig oder pyramidenstumpfähnlich gestaltet sind.

5. Fahrzeugreifen nach einem der Ansprüche 1 bis 4, dadurch gekennzeichnet, daß von den die Profilelementinseln (4', 4'', 12) einschließenden Feineinschnitten (3', 3'', 15') Feineinschnitte (5', 5'', 15) abzweigen, die entweder sackförmig enden oder die die Profilelementinseln umschließenden Feineinschnitte mit Nuten verbinden oder Profilelementinseln einschließende Feineinschnitte miteinander verbinden.

6. Fahrzeugreifen nach Anspruch 5, dadurch gekennzeichnet, daß die Schnittkanten zwischen den die Profilelementinseln (4', 4'', 12) einschließenden Feineinschnitten (3', 3'', 15') und den von diesen abzweigenden Feineinschnitten (5', 5'', 15) mindestens einen Winkel von 15° mit einer Normalen auf die Profiloberfläche einschließen.

7. Fahrzeugreifen nach Anspruch 5 oder 6, dadurch gekennzeichnet, daß die von den die Profilelementinseln (4', 4'', 12) einschließenden Feineinschnitten (3', 3'', 15') abzweigenden Feineinschnitte (5', 5'', 15) breiter sind, insbesondere doppelt so breit sind, als die die Profilelementinseln (4', 4'', 12) einschließenden Feineinschnitte (3', 3'', 15').

8. Fahrzeugreifen nach einem der Ansprüche 1 bis 7, dadurch gekennzeichnet, daß Feineinschnitte (15) vorgesehen sind, die sich unterhalb der Profilelementoberfläche aufspalten, so daß die Profilelementinseln (12) unterhalb der Profiloberfläche angeordnet sind.

9. Fahrzeugreifen nach einem der Ansprüche 1 bis 8, dadurch gekennzeichnet, daß die Profilelementinseln (12) an ihrer Basis unmittelbar aneinander anschließen.

## Claims

1. Vehicle tyre, having a tread strip which includes tread strip bands defined by grooves (2) or profile blocks provided with fine incisions (3', 3'', 3''', 15) which, when they extend into the tread strip in the radial direction, surround profile element islands (4', 4'', 4''', 12), the cross-sectional area of which and/or the circumference of which becomes greater in the direction of the tread strip interior, when viewed parallel to the tread strip surface, characterised in that the fine incisions (3', 3'', 3''', 15), which surround the profile element islands (4', 4'', 4''', 12), are either configured to be doubly conical, at least over a portion of their radial extension, so that the cross-sectional area of the profile element islands (4', 4'', 4'''), when viewed from the tread strip surface, initially becomes greater and decreases again after a predetermined pattern depth, or are configured so that, after a predetermined pattern depth, they extend into a pair of fine incisions (15''), which are separated from each other and the mutual spacing therebetween decreases with an increasing profile depth.

2. Vehicle tyre according to claim 1, characterised in that the cross-sectional area only starts to decrease once the legal minimum pattern depth has been reached.

3. Vehicle tyre according to claim 1 or 2, characterised in that the profile element islands (4') have a conical or frusto-conical configuration, at least over a portion of their radial extension.

4. Vehicle tyre according to claim 1 or 2, characterised in that the profile element islands (4'', 4''', 12) have a pyramid-shaped or truncated pyramid-shaped configuration or a configuration similar to a truncated pyramid, at least over a portion of their radial extension.

5. Vehicle tyre according to one of claims 1 to 4, characterised in that fine incisions (5', 5'', 15) branch-off from the fine incisions (3', 3'', 15'), which enclose the profile element islands (4', 4'', 12), and either terminate in the form of a bag or connect the fine incisions, which surround the profile element islands, to grooves, or interconnect fine incisions which enclose profile element islands.

6. Vehicle tyre according to claim 5, characterised in that the cut edges between the fine incisions (3', 3'', 15'), which enclose the profile element islands (4', 4'', 12), and the fine incisions (5', 5'', 15), which branch-off from the first-mentioned incisions, form at least an angle of 15° with a line perpendicular to the profile surface.

7. Vehicle tyre according to claim 5 or 6, characterised in that the fine incisions (5', 5'', 15), which branch-off from the fine incisions (3', 3'', 15') enclosing the profile element islands (4', 4'', 12), are wider than, and more especially twice as wide as, the fine incisions (3', 3'', 15') which enclose the profile element islands (4', 4'', 12).

8. Vehicle tyre according to one of claims 1 to 7, characterised in that fine incisions (15) are provided, which split-up below the profile element surface, so that the profile element islands (12) are disposed below the profile surface.

9. Vehicle tyre according to one of claims 1 to 8, characterised in that the profile element islands (12) communicate directly with one another at their base.

## Revendications

1. Bandage pneumatique pour véhicule, présentant une surface de roulement comprenant des bandes de surface de roulement ou des blocs profilés délimité(e)s par des rainures (2) et muni(e)s de minces entailles (3', 3'', 3''', 15) qui ceinturent dans le sens radial, en s'étendant dans la surface de roulement, des éléments profilés isolés (4', 4'', 4''', 12) dont la surface de section transversale et/ou le pourtour, observé(e) parallèlement à la face supérieure de la surface de roulement, croît en direction de l'intérieur de la surface de roulement, caractérisé par le fait que les minces entailles (3', 3'', 3''', 15) ceinturant les éléments profilés isolés (4', 4'', 4''', 12) sont configurées en des doubles cônes, au moins sur une partie de leur étendue radiale, de telle sorte que la surface de section transversale des éléments profilés isolés (4', 4'', 4'''), observée à partir de la face supérieure de la surface de roulement, augmente tout d'abord, puis diminue de nouveau à partir d'une profondeur de dessin déterminée ; ou bien fusionnent, à partir d'une profondeur de dessin déterminée, dans une paire de minces entailles (15'') qui sont séparées l'une de l'autre et dont l'espacement mutuel diminue au fur et à mesure de l'augmentation de la profondeur du profil.

2. Bandage pneumatique pour véhicule, selon la revendication 1, caractérisé par le fait que la décroissance de la surface de section transversale intervient uniquement lorsque la profondeur minimale réglementaire du dessin est atteinte.

3. Bandage pneumatique pour véhicule, selon la revendication 1 ou 2, caractérisé par le fait que les éléments profilés isolés (4') sont de configuration conique ou tronconique au moins sur une partie de leur étendue radiale.

4. Bandage pneumatique pour véhicule, selon la revendication 1 ou 2, caractérisé par le fait que les éléments profilés isolés (4'', 4''', 12) sont de configuration pyramidale, en forme de pyramide tronquée ou du type pyramide tronquée au moins sur une partie de leur étendue radiale.

5. Bandage pneumatique pour véhicule, selon l'une des revendications 1 à 4, caractérisé par le fait que de minces entailles (5', 5'', 15), bifurquant des minces entailles (3', 3'', 15') incluant les éléments profilés isolés (4', 4'', 12), s'achèvent en impasse ou relient, à des rainures, les minces entailles ceinturant les éléments profilés isolés, ou bien relient les unes aux autres des minces entailles incluant des éléments profilés isolés.

6. Bandage pneumatique pour véhicule, selon la revendication 5, caractérisé par le fait que les arêtes d'intersection, entre les minces entailles (3', 3'', 15') incluant les éléments profilés isolés (4', 4'', 12), et les minces entailles (5', 5'', 15) bifurquant de ces dernières, décrivent au moins un angle de 15° avec une perpendiculaire à la face supérieure du profil.

7. Bandage pneumatique pour véhicule, selon la revendication 5 ou 6, caractérisé par le fait que les minces entailles (5', 5'', 15), bifurquant des minces entailles (3', 3'', 15') incluant les éléments profilés isolés (4', 4'', 12), sont plus larges et, notamment, deux fois plus larges que les minces entailles (3', 3'', 15') incluant les éléments profilés isolés (4', 4'', 12).

8. Bandage pneumatique pour véhicule, selon l'une des revendications 1 à 7, caractérisé par le fait que sont prévues de minces entailles (15) se scindant au-dessous de la surface des éléments profilés, si bien que les éléments profilés isolés (12) se trouvent au-dessous de la face supérieure du profil.

9. Bandage pneumatique pour véhicule, selon l'une des revendications 1 à 8, caractérisé par le fait que les éléments profilés isolés (12) sont directement adjacents les uns aux autres par leur base.
